# EUROPÄISCHE PATENTANMELDUNG

(11) **EP 1 704 934 A2**
(43) Veröffentlichungstag der Anmeldung: **27.09.2006**
(21) Anmeldenummer: 06004852.7
(22) Anmeldetag: 09.03.2006
(51) Int. Cl.: B08B 9/04, E03F 9/00, C05F 17/02

(54) **Räumvorrichtung für schwer zugängliche Kanäle**

(30) Priorität: 22.03.2005 DE 102005013273
(71) Anmelder: LINDE-KCA-Dresden GmbH, 01277 Dresden (DE)
(72) Erfinder: Baumann, Thorsten, 01279 Dresden (DE); Pankow, Steffen, Dr., 01219 Dresden (DE)

(57) **Zusammenfassung**

Es wird eine Räumvorrichtung zum Beräumen schwer zugänglicher Kanäle, insbesondere von Kompostierungsanlagen mit einem Belüftungsboden, beschrieben. Das auf dem Belüftungsboden liegende zu kompostierende Material wird über Löcher im Belüftungsboden von unten belüftet, wodurch ein aerober Abbau des Materials bewirkt wird. Da durch die Löcher im Belüftungsboden Material in den darunter liegenden Raum fallen kann, muss dieser Raum regelmäßig von Ablagerungen befreit werden. Hierzu ist ein Schaber vorgesehen, der mittels Schleppseilen und Rückzugseilen bewegt werden kann. Die Schleppseile sind an Führungskufen des Schabers derart befestigt, dass beim Schleppvorgang eine Kraft auf die Vorderkante des Schabers aufgebracht wird. Die Rückzugseile sind dagegen derart befestigt, dass beim Zurückziehen des Schabers der Schaber so gekippt wird, dass nur noch die Führungskufen Bodenkontakt haben.

## Beschreibung

Die Erfindung betrifft eine Räumvorrichtung zum Beräumen schwer zugänglicher Kanäle, insbesondere von Kompostierungsanlagen.

Zur Behandlung von Bioabfällen sind Kompostierungsanlagen, bei denen die Bioabfälle aufgeschichtet und belüftet werden, weit verbreitet. Sogenannte Tunnelkompostierungsanlagen besitzen einen tunnelartigen Aufbau, wobei der Tunnel eine Länge von ca. 15 bis ca. 40 Meter und eine Breite von ca. 3,5 bis 6 Meter sowie einen ca. 1 Meter hohen Belüftungsboden, üblicherweise mit mittiger Trennwand, aufweist. Der Boden eines solchen "Rottetunnels " ist verfahrensbedingt gelocht, wobei die Löcher z.B. einen Durchmesser von ca. 40 mm aufweisen. Durch diese Löcher wird Luft oder mit Sauerstoff angereicherte Luft bzw. technisch reiner Sauerstoff in das Rottematerial gedrückt. Dadurch wird ein aerober Abbauvorgang, der auch als Kompostierung oder Rotte bezeichnet wird, bewirkt. Bei Tunnelkompostierungsanlagen mit Schubboden ist dieser Belüftungsboden nur von der Stirnseite und zum Teil auch lediglich über relativ kleine Wartungsöffnungen zugänglich. Beim Befüllen und Entleeren fallen durch diese Löcher unvermeidlich Bestandteile des Rottegutes in den Belüftungsboden. Laut Betriebsanweisung sind diese Ablagerungen einmal pro Jahr zu entfernen. Dieser 2 bis 3 Meter breite und entsprechend lange Kanal ist jedoch nur bekriechbar, was aufgrund der Materialeigenschaften nur eingeschränkt möglich ist. Insbesondere sind Fragen der Arbeitshygiene zu beachten und es ist eine Atemschutzausrüstung erforderlich.

Der vorliegenden Erfindung liegt die Aufgabe zugrunde, eine Räumvorrichtung zur Verfügung zu stellen, die auf wirtschaftliche Weise eine Reinigung schwer zugänglicher Kanäle ermöglicht, ohne dass die genannten Nachteile bisheriger Reinigungsmethoden auftreten.

Diese Aufgabe wird erfindungsgemäß dadurch gelöst, dass die Räumvorrichtung einen Führungskufen aufweisenden Schaber aufweist, wobei an den Führungskufen mit einer Winde verbundene Schleppseile derart befestigt sind, dass beim Schleppvorgang zum Räumen von in dem Kanal befindlichem Material eine Kraft auf die Vorderkante des Schabers aufgebracht wird, und Rückzugseile an den Führungskufen derart befestigt sind, dass beim Zurückziehen des Schabers der Schaber so gekippt wird, dass nur noch die Führungskufen Bodenkontakt haben.

Die Erfindung beruht auf der Überlegung, das Prinzip von Räumvorrichtungen unterschiedlichster Art, die aus vielen Bereichen des Lebens bekannt sind, z.B. das Prinzip von Schneepflügen, Räumeinrichtungen in Prozessbehältern oder Teigschabern im Küchenbereich, auf den Einsatz in schwer zugänglichen Kanälen, insbesondere in Kompostierungsanlagen, zu übertragen und die technische Ausgestaltung an die stark abweichenden Anforderungen anzupassen. Es sollte eine technisch wenig aufwendige und damit kostengünstige Alternative zu einem verschiedentlich diskutierten roboterartig funktionierenden, vollautomatischen System, welches sehr hohe Investitionskosten erforderlich machen würde, gefunden werden.

Vorzugsweise sind die Schleppseile im unteren Bereich der Führungskufen befestigt, während die Rückzugseile im oberen Bereich der Führungskufen angebracht sind. Besonders bevorzugt weisen die Führungskufen in verschiedenen Höhen befindliche Befestigungspunkte für die Schleppseile auf, so dass die Kraftausübung auf die Vorderkante des Schabers beim Schleppvorgang veränderbar ist. Die Rückzugseile sind vorteilhafterweise in solcher Höhe an den Führungskufen befestigt, dass beim Zurückziehen des Schabers der Schaber um ca. 100 bis 120 Grad gekippt wird.

Die Funktionsweise der Erfindung lässt sich also am Beispiel einer Tunnelkompostierungsanlage folgendermaßen erklären: Ein Schaber mit der ungefähren Breite eines Kanals einer Tunnelkompostierungsanlage ist mit mindestens zwei Führungskufen ausgestattet. Zwei Schleppseile werden so befestigt, dass während des Schleppvorgangs durch die vorzugsweise verstellbare Höhe des Schlepppunktes eine vorteilhafterweise veränderbare Kraft auf die Vorderkante des Schabers aufgebracht wird. Die Zugkräfte können über eine Winde aufgebracht werden, die im einfachsten Fall handbedient ist und vor der Stirnwand des Tunnels aufgestellt wird. Während des Schleppvorganges wird das zu beräumende Material aufgenommen und auf dem Schaberbrett liegend und davor herschiebend aus dem Kanal zum vorderen Ende transportiert, wo es entnommen werden kann. Ist die Materialmenge zu groß, so dass die Transportkräfte ein bestimmtes Maß überschreiten, so fällt das überzählige Material über die Rückwand und wird beim nächsten Mal entfernt. Der Reinigungsvorgang wird so lange wiederholt, bis der gewünschte Reinigungsgrad erreicht ist.

Beim Zurückziehen wird die Vorrichtung um ca. 100 bis 120 Grad gekippt. Dies geschieht einfach durch das Zurückziehen, da das Rückzugseil entsprechend befestigt wurde. Da sich beim Zurückziehen der Schaber mit genügendem Abstand über dem Boden befindet, wobei nur die Kufen Bodenkontakt haben, wird praktisch kein Material rückverschleppt. Die Kufen sind vorteilhafterweise dabei so geformt, dass ein Überkippen beim Richtungswechsel verhindert wird.

Gemäß einer Weiterbildung des Erfindungsgedankens besitzt der Schaber an den Seiten eine kugelförmige oder halbkugelförmige Führung, die ein Verkanten an den Seitenwänden verhindert. Diese Führung und alle gefährdeten Teile wie z.B. Kufen und Schaberkante werden vorteilhafterweise mit Schleißteilen geschützt. Hierzu kann beispielsweise einfaches PE-Flachmaterial eingesetzt werden. Auf die Seitenführungen können kurze PE-Rohrstücke mit Kappen als Abweiser und Verschleißschutz aufgesetzt sein.

Die erfindungsgemäße Räumvorrichtung ist insbesondere für einen Einsatz in Kompostierungsanlagen, speziell Tunnelkompostierungsanlagen, vorgesehen, die einen Belüftungsboden und darunter befindliche Kanäle aufweisen. Auf dem Belüftungsboden liegendes, zu kompostierendes Material wird von unten belüftet. Über Löcher im Belüftungsboden nach unten durchfallendes Material wird mittels der Räumvorrichtung aus den Kanälen entfernt.

Bei einer besonders bevorzugten Ausführungsform der Erfindung gehören außer dem Schaber ein oder zwei Winden zum Ziehen des Schabers, ein unverrottbares Seil beispielsweise aus Polyamid, welches im Kanal verbleiben kann, eine Zugöffnung bzw. eine Umlenkrolle an der Tunnelrückwand und eine Zug- und Reinigungsöffnung im vorderen Tunnelteil, ggf. auch zum Einbringen des Schabers, zum System. Die Zug-und Reinigungsöffnung im vorderen Tunnelteil sollte nach Möglichkeit so groß gestaltet sein, dass der komplette Schaber quer aus dem Tunnel herausfahren kann.

Das Zurückziehen des Schabers in die Ausgangsposition kann von der Tunnelrückseite erfolgen, sofern dort eine Wanddurchführung vorgesehen ist. Es kann aber auch an der Tunnelrückseite eine Umlenkvorrichtung installiert werden, so dass das Zurückziehen von der Stirnseite aus durchgeführt werden kann.

Insgesamt wird mit der Erfindung insbesondere dem Betreiber von Kompostierungsanlagen eine bisher nicht vorhandene Möglichkeit in die Hand gegeben, seine Anlage entsprechend den Erfordernissen und unter Berücksichtigung der Vorschriften des Arbeits- und Gesundheitsschutzes mit vertretbarem Aufwand zu warten.

Im folgenden soll die Erfindung anhand von in den Figuren schematisch dargestellten Ausführungsbeispielen näher erläutert werden.

### Es zeigen

- Figur 1: eine Seitenansicht eines Schabers mit Führungskufen
- Figur 2: eine Vorderansicht eines Schabers mit Führungskufen
- Figur 3: eine isometrische Ansicht eines Schabers mit Führungskufen
- Figur 4: eine Draufsicht eines Schabers mit Führungskufen

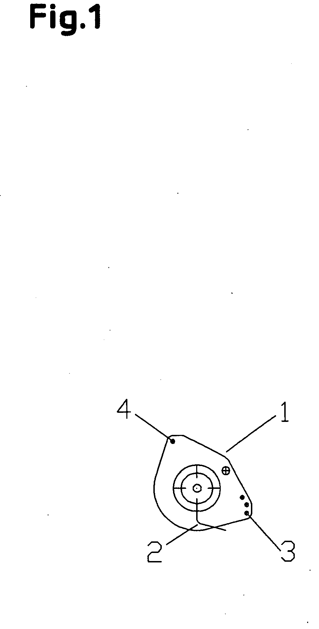

In der Seitenansicht von Figur 1 ist die besondere Gestaltung der Führungskufen 1 gut zu erkennen. Im unteren Bereich der Führungskufen 1 sind Befestigungslöcher 3 für das Zugseil in verschiedenen Höhen vorgesehen. Während des Schleppvorgangs kippen die Führungskufen 1, so dass eine nach unten gerichtete Kraft auf das Schaberblech 2 ausgeübt wird. Im oberen Bereich der Führungskufen 1 ist ein Befestigungsloch 4 für ein Rückzugseil vorgesehen. Beim Zurückziehen kippen die Führungskufen 1 nach hinten, so dass das Schaberblech 2 vom Boden abhebt.

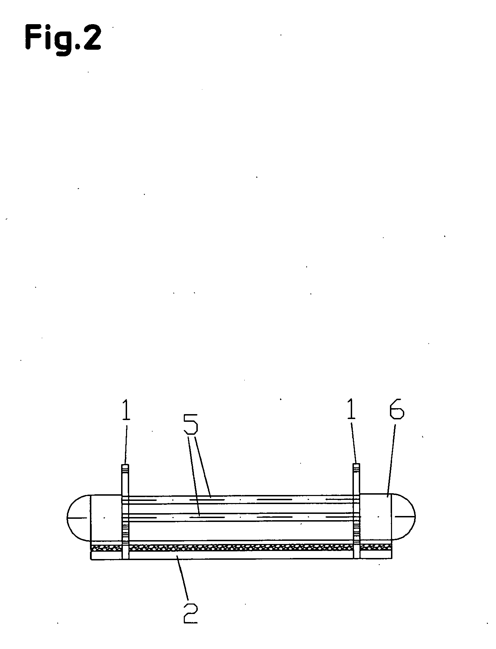

In der Vorderansicht von Figur 2 sind neben den beiden Führungskufen 1 und dem über die gesamte Breite des Schabers reichenden Schaberblech 2 auch die seitlich an den Führungskufen 1 angebrachten kugelförmigen Führungen 6 dargestellt. Aüßerdem sind zwischen den Führungskufen 1 Absteifungen 5 vorgesehen.

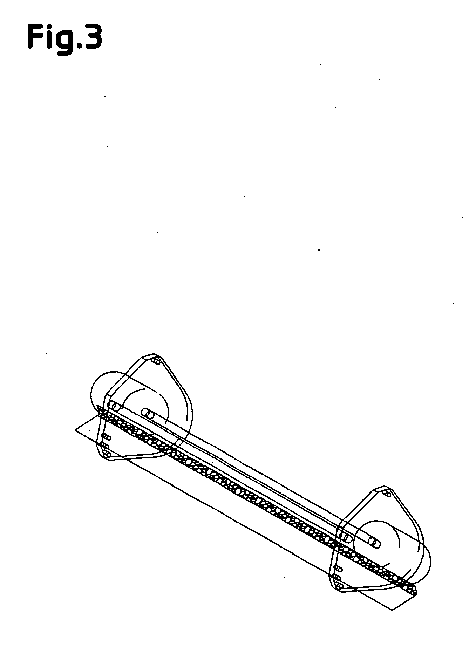

In Figur 3 ist eine isometrische Darstellung des in den Figuren 1 und 2 gezeigten Schabers gegeben.

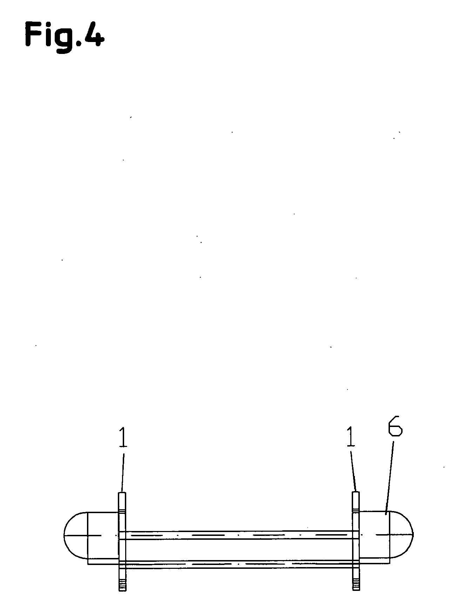

In der Draufsicht desselben Schabers in Figur 4 sind die Führungskufen 1 und die seitlichen kugelförmigen Führungen 6 deutlich sichtbar.

## Patentansprüche

1. Räumvorrichtung zum Beräumen schwer zugänglicher Kanäle, **dadurch gekennzeichnet, dass** die Räumvorrichtung einen Führungskufen aufweisenden Schaber aufweist, wobei an den Führungskufen mit einer Winde verbundene Schleppseile derart befestigt sind, dass beim Schleppvorgang zum Räumen von in dem Kanal befindlichem Material eine Kraft auf die Vorderkante des Schabers aufgebracht wird, und Rückzugseile an den Führungskufen derart befestigt sind, dass beim Zurückziehen des Schabers der Schaber so gekippt wird, dass nur noch die Führungskufen Bodenkontakt haben.

2. Räumvorrichtung nach Anspruch 1, **dadurch gekennzeichnet, dass** die Schleppseile im unteren Bereich der Führungskufen befestigt sind, während die Rückzugseile im oberen Bereich der Führungskufen angebracht sind.

3. Räumvorrichtung nach Anspruch 1 oder 2, **dadurch gekennzeichnet, dass** die Führungskufen in verschiedenen Höhen befindliche Befestigungspunkte für die Schleppseile aufweisen, so dass die Kraftausübung auf die Vorderkante des Schabers beim Schleppvorgang veränderbar ist.

4. Räumvorrichtung nach einem der Ansprüche 1 bis 3, **dadurch gekennzeichnet, dass** die Rückzugseile in solcher Höhe an den Führungskufen befestigt sind, dass beim Zurückziehen des Schabers der Schaber um ca. 100 bis ca. 120 Grad gekippt wird.

5. Räumvorrichtung nach einem der Ansprüche 1 bis 4, **dadurch gekennzeichnet, dass** der Schaber an den Seiten halbkugelförmige Führungen aufweist.

6. Räumvorrichtung nach Anspruch 5, **dadurch gekennzeichnet, dass** die halbkugelförmigen Führungen und/oder die Vorderkante des Schabers und/oder die Führungskufen mit Schleißteilen geschützt sind.

7. Verwendung der Räumvorrichtung nach einem der Ansprüche 1 bis 6 in einer Kompostierungsanlage mit einem Löcher aufweisenden Belüftungsboden, über den auf dem Belüftungsboden aufbringbares, zu kompostierendes Material von unten belüftbar ist, wobei die Räumvorrichtung zum Räumen von unterhalb des Belüftungsbodens befindlichem Material vorgesehen ist.
